# FASCICULE DE BREVET EUROPEEN

(11) **EP 3 201 714 B1**
(45) Date de publication et mention de la délivrance du brevet: **06.03.2019**
(21) Numéro de dépôt: 15778251.7
(22) Date de dépôt: 02.10.2015
(51) Int. Cl.: G06F 1/16, G06F 3/01, H04N 1/00, B42D 15/04, B42D 15/02

(54) **PROCEDE DE FABRICATION D'UN DISPOSITIF ET D'UN SYSTEME COMPRENANT CE DISPOSITIF, TEL QU'UNE CARTE AVEC ECRAN, ET SYSTEME DE PERSONNALISATION D'UN SUPPORT TRADITIONNEL INTEGRANT UN AFFICHEUR VIDEO ET PHOTO**
VERFAHREN ZUR HERSTELLUNG EINER VORRICHTUNG UND SYSTEM MIT BESAGTER VORRICHTUNG, WIE ETWA EINE KARTE MIT EINEM BILDSCHIRM UND SYSTEM ZUR PERSONALISIERUNG EINER TRADITIONELLEN STÜTZE MIT EINGEBAUTER VIDEO- UND FOTOANZEIGE
METHOD FOR PRODUCING A DEVICE AND A SYSTEM COMPRISING SAID DEVICE, SUCH AS A CARD WITH A SCREEN, AND SYSTEM FOR PERSONALISING A TRADITIONAL SUPPORT COMPRISING A BUILT-IN VIDEO AND PHOTO DISPLAY

(30) Priorité: 03.10.2014 FR 1459513
(43) Date de publication de la demande: 09.08.2017
(73) Titulaire: Milon, Pascal Gérard, 27420 Cahaignes (FR)
(72) Inventeur: Milon, Pascal Gérard, 27420 Cahaignes (FR)
(74) Mandataire: IP Trust
(86) Numéro de dépôt international: PCT/EP2015/072826
(87) Numéro de publication internationale: WO 2016/050966

(56) Documents cités:
- US-A- 5 845 425
- US-A1- 2010 175 287
- US-A1- 2010 296 010
- US-A1- 2011 232 141
- US-A1- 2011 247 247

## Description

### Domaine technique

L'invention se rapporte au domaine de l'intégration d'afficheurs de vidéos et photos dans des supports traditionnels tels que les cartes, brochures, dossiers, ou encore des journaux. Plus précisément, l'invention concerne un dispositif se rapportant à des afficheurs de vidéos et photos et des supports graphiques. L'invention concerne en outre un procédé de fabrication d'un tel dispositif ainsi qu'un système comprenant un tel dispositif. Enfin, l'invention concerne en outre la fabrication de carte comprenant un tel système.

### Etat de la technique antérieur

On connaît des dispositifs présentant des afficheurs de vidéos intégrées dans un support traditionnel tel qu'une carte de voeux. D1 US2011 247247 divulgue une carte électronique avec deux ou plusieurs panneaux.

La société Spreengs propose de tels dispositifs. Cependant, le support traditionnel n'est pas personnalisable : un client de cette société peut tout au plus choisir un thème pour le support traditionnel, mais ne peut pas par exemple réaliser un support traditionnel comportant une photo qu'il a lui-même photographiée.

Il est possible de faire réaliser un support traditionnel personnalisé intégrant un afficheur vidéo pour un prix élevé. Le prix est dû au format spécifique de ce support et à un coût de production élevé pour le fabricant. Pour fixer les idées, la réalisation d'un support traditionnel personnalisé intégrant un afficheur vidéo est de l'ordre de 200 euros.

Un but de l'invention est de proposer un dispositif comprenant un support traditionnel personnalisé et un afficheur vidéo pour un prix moins élevé que les dispositifs connus, par exemple de l'ordre de 50 euros. Un autre but de l'invention est de proposer un procédé de fabrication du dispositif selon l'invention.

### Exposé de l'invention

On atteint au moins l'un des objectifs précités avec un dispositif comprenant : un premier étui apte à recevoir un support graphique, le premier étui comprenant une première fenêtre agencée pour permettre d'observer tout ou partie de, de préférence débouchant sur, le support graphique, et un deuxième étui apte à recevoir un appareil électronique comprenant un afficheur électronique, le deuxième étui comprenant une deuxième fenêtre agencée pour permettre d'observer tout ou partie de, de préférence débouchant sur, l'afficheur électronique, les premier et deuxième étuis étant reliés l'un à l'autre.

Ainsi, la première fenêtre permet d'observer le support graphique, ce qui permet de personnaliser le dispositif.

Avantageusement, le dispositif peut en outre comprendre des zones délimitées agencées pour transmettre une commande à destination de l'appareil électronique. Ainsi, le dispositif constitue un moyen de commande de l'appareil électronique. Il n'est ainsi pas nécessaire d'accéder physiquement à l'appareil électronique pour le commander. Il en résulte une simplicité d'utilisation de l'appareil électronique par le dispositif selon l'invention.

De préférence, la deuxième fenêtre et les zones délimitées sont disposées sur une même face. Ainsi, un utilisateur du dispositif selon l'invention peut observer en même temps la deuxième fenêtre et les zones délimitées.

Avantageusement, les zones délimitées peuvent être disposées sur une face du deuxième étui.

Selon un mode de réalisation particulier, le deuxième étui peut en outre être apte à recevoir un connecteur de l'appareil électronique et le deuxième étui peut en outre comprendre une ouverture agencée pour permettre une connexion d'un autre dispositif électronique à ce connecteur, de préférence dans une position du dispositif dite fermée. Ainsi, il n'est pas nécessaire d'extraire l'appareil électronique du deuxième étui pour connecter un autre dispositif électronique à ce connecteur. Il en résulte un gain de temps et une simplicité de connexion à l'appareil électronique.

De manière avantageuse, le dispositif peut être au moins partiellement constitué d'une seule pièce de matériau commune aux deux étuis. Cette caractéristique a pour avantage une vitesse de production du dispositif augmentée par rapport à l'utilisation de différents matériaux, ainsi qu'un coût de production diminué par rapport à l'utilisation d'une pluralité de matériaux. De préférence, le dispositif est intégralement constitué d'une seule pièce de matériau.

De préférence, la pièce de matériau commune est une pièce de matériau en feuille, en particulier du papier épais. Un matériau en feuille a pour avantage d'être pliable et peu onéreux.

Dans un mode de réalisation particulier, le premier étui peut comprendre des moyens de protection du support graphique, de préférence une feuille transparente constituée de PVC. Ces moyens de protection peuvent en outre être agencés pour empêcher l'accès au support graphique par la première fenêtre. Ainsi, le support graphique est protégé d'agressions externes au dispositif et présente en conséquence une plus grande pérennité.

De manière avantageuse, les deux étuis peuvent être reliés en étant articulés l'un à l'autre de sorte que le premier étui fasse couvercle pour le deuxième étui, en particulier pour la fenêtre destinée à l'afficheur électronique lorsque le dispositif est dans une position dite fermée. Ainsi, le premier étui peut en outre être agencé pour protéger l'afficheur électronique et les zones délimitées lorsque le dispositif est dans la position fermée. L'afficheur électronique et les zones délimitées présentent en conséquence une plus grande pérennité.

Dans un mode de réalisation particulièrement avantageux, le premier étui peut en outre comprendre une ouverture agencée pour permettre la mise en place et le retrait du support graphique du premier étui, de préférence lorsque le dispositif est dans une position dite fermée. L'ouverture peut être agencée pour permettre la mise en place et le retrait du support graphique du premier étui lorsque le dispositif selon l'invention est dans la position fermée. Cette caractéristique a pour avantage de permettre une personnalisation du dispositif selon l'invention sans pour autant avoir à ouvrir le dispositif. L'afficheur électronique présente en conséquence une plus grande pérennité.

Selon un deuxième aspect il est proposé un procédé de fabrication d'un dispositif par pliage d'un matériau en feuille. Ce procédé de fabrication a pour avantage d'être rapide et économique.

Selon un troisième aspect il est proposé un système comprenant un appareil électronique incluant un afficheur électronique et un dispositif selon l'invention.

De manière avantageuse, l'appareil électronique peut en outre comprendre un connecteur relié à l'afficheur électronique. Cette caractéristique a pour avantage de permettre d'interagir avec l'afficheur électronique sans le retirer du deuxième étui, ce qui entraîne un gain de temps. L'afficheur électronique présente ainsi une plus grande pérennité.

De préférence, l'appareil électronique comprend des moyens physiques de commande et les zones délimitées précitées sont disposées au regard de ces moyens physiques de commande. Ainsi, il n'y a pas de liaison supplémentaire entre les zones délimitées et les moyens physiques de commande, la pression exercée par un doigt sur l'étui au niveau d'une des zones délimitées engendrant directement la commande souhaitée sur l'appareil électronique.

Avantageusement, le système peut être destiné à constituer une carte-souvenir, une carte de voeux, une carte postale, un faire-part ou un album souvenir.

Selon un quatrième aspect, il est proposé un procédé pour constituer une carte telle que carte souvenir, carte de voeux, carte postale, faire-part ou album souvenir. Le précédé de constitution d'une telle carte comprend un afficheur électronique d'un système selon l'invention. Cet afficheur électronique peut être chargé avec un contenu vidéo, photo et sonore personnalisé et le support graphique personnalisé est placé dans le premier étui. Selon l'invention, il est prévu un dispositif selon la revendication 1. Les caractéristiques préférées de l'invention sont exposées dans les revendications dépendantes.

### Description des figures

D'autres avantages et particularités de l'invention apparaîtront à la lecture de la description détaillée de mises en oeuvre et de modes de réalisation nullement limitatifs, au regard de figures annexées sur lesquelles :
- la figure 1 est une vue en perspective d'un dispositif selon l'invention à l'état semi-ouvert ;
- la figure 2 représente schématiquement un flan pour la réalisation du dispositif selon l'invention ;
- la figure 3 représente schématiquement le dispositif selon l'invention, vu de face en position fermée ; et
- la figure 4 représente schématiquement une partie du flan.

### Description de modes de réalisation

Il est maintenant décrit un premier mode de réalisation d'un dispositif 1 selon l'invention. Le dispositif 1 comprend :
- un premier étui 2,
- un deuxième étui 3.

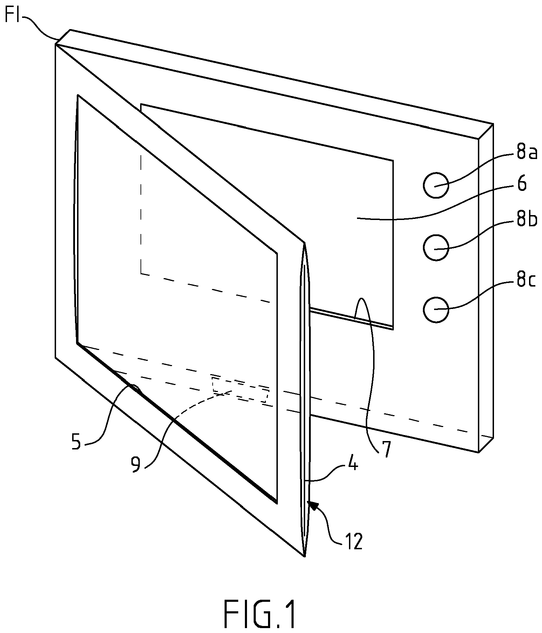

Le premier étui 2 et le deuxième étui 3 sont reliés l'un à l'autre. Le dispositif 1 est dans une position dite fermée lorsque le premier étui 2 est disposé sur le deuxième étui 3. Plus précisément et comme cela est illustré par la figure 1, les deux étuis 2 et 3 sont reliés en étant articulés l'un à l'autre le long d'un bord commun Fl entre une position fermée et une position ouverte.

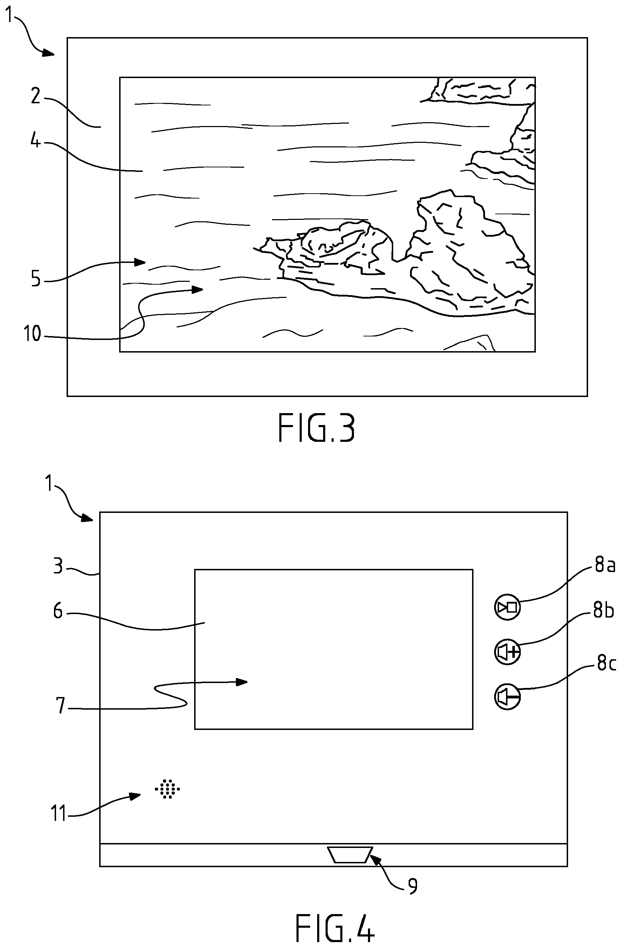

La figure 3 illustre une vue de face du premier étui 2 formant partie du dispositif 1 selon l'invention. Le premier étui 2 est apte à recevoir de façon amovible un support graphique 4. Le premier étui 2 comprend une première fenêtre 5. La première fenêtre 5 débouche sur une partie du support graphique 4. La première fenêtre 5 est agencée pour permettre d'observer une partie du support graphique 4.

Le support graphique 4 est une carte qui peut être remplacée par une autre carte, photo, carte postale ou illustration.

Le premier étui 2 est constitué par une pochette plate présentant le long d'un bord autre que celui de l'articulation une ouverture 12 permettant de glisser dans le premier étui 2 la totalité du support graphique 4 de façon que l'image du support graphique 4 soit apparente à travers la première fenêtre 5. Dans la position fermée, la première fenêtre 5 est tournée du côté opposé au deuxième étui 3 de façon que le support graphique 4 soit visible lorsque le dispositif est fermé. Les contours des deux étuis sont sensiblement identiques de façon à se superposer en position fermée.

L'ouverture 12 est agencée pour permettre la mise en place et le retrait du support graphique 4 du premier étui 2 lorsque le dispositif 1 est dans la position fermée. Cette caractéristique a pour avantage de permettre une personnalisation du dispositif 1 sans pour autant avoir à ouvrir le dispositif 1, ce qui résulte en une plus grande pérennité de l'afficheur électronique 6.

Comme illustré sur la figure 1, le deuxième étui 3 a une forme de boîte plate apte à recevoir un appareil électronique.

L'appareil électronique comprend un afficheur électronique 6, un connecteur, un haut-parleur, une mémoire et un processeur ainsi que des moyens aimantés.

Un aimant (non représenté) inséré dans le premier étui 2 coopère avec les moyens aimantés de l'appareil électronique pour assurer un maintien en position fermée. On peut passer en position ouverte en surmontant la force magnétique générée par l'aimant du premier étui 2.

Lorsque le dispositif 1 est manipulé pour passer de la position fermée à la position ouverte, le processeur de l'appareil électronique 1 déclenche un affichage par l'afficheur électronique 6 d'un média stocké dans la mémoire de l'appareil électronique. Lorsque le dispositif 1 est manipulé pour passer de la position ouverte à la position fermée, le processeur de l'appareil électronique arrête l'affichage d'un media par l'afficheur électronique 6.

Le deuxième étui 3 comprend une deuxième fenêtre 7 débouchant sur l'afficheur électronique 6. La deuxième fenêtre 7 est agencée pour permettre d'observer au moins une partie l'afficheur électronique 6. La deuxième fenêtre 7 est disposée sur une première face du deuxième étui 3.

Des zones délimitées 8a, 8b et 8c sont également illustrées sur les figures 1, 2 et 4. Ces zones délimitées 8a, 8b et 8c sont agencées pour transmettre une commande à destination de l'appareil électronique. Les zones délimitées 8a, 8b et 8c et la deuxième fenêtre 7 sont disposées sur la même première face du deuxième étui 3. Ainsi, un utilisateur du dispositif 1 peut observer en même temps la deuxième fenêtre 7 et les zones délimitées 8a, 8b et 8c.

La zone délimitée 8a est agencée de sorte qu'une première pression sur la zone délimitée 8a transmet une commande de mise en marche à destination de l'appareil électronique. La zone délimitée 8a est en outre agencée de sorte qu'une autre pression sur la zone délimitée 8a transmet une commande de mise en pause à destination de l'appareil électronique. La zone délimitée 8a est en outre agencée de sorte qu'une pression prolongée durant une durée prédéterminée, par exemple de deux secondes, sur la zone délimitée 8a transmet une commande de passage à un autre média, lorsqu'au moins deux médias sont stockés dans la mémoire de l'appareil électronique.

La zone délimitée 8b est agencée de sorte qu'une pression sur la zone délimitée 8b transmet une commande d'augmentation du volume sonore à destination de l'appareil électronique.

La zone délimitée 8c est agencée de sorte qu'une pression sur la zone délimitée 8c transmet une commande de diminution de volume à destination de l'appareil électronique.

Ainsi, le dispositif 1 constitue un moyen de commande de l'appareil électronique. Il n'est pas nécessaire d'accéder physiquement à l'appareil électronique pour le commander. Il en résulte une simplicité d'utilisation de l'appareil électronique par le dispositif 1.

Le deuxième étui 3 comprend en outre une ouverture 9 (figure 4) disposée sur une deuxième face du flan, l'ouverture 9 étant destinée à se trouver au regard d'un connecteur de l'appareil électronique. L'ouverture 9 permet une connexion d'un autre dispositif électronique au connecteur de l'appareil électronique. Ainsi, il n'est pas nécessaire d'extraire l'appareil électronique du deuxième étui 3 pour le connecter à un dispositif électronique externe. Il en résulte un gain de temps et une simplicité de connexion à l'appareil électronique.

Le deuxième étui 3 comprend en outre une autre ouverture 11, disposée sur la première face du deuxième étui 3. Dans l'exemple représenté, l'autre ouverture 11 est constituée d'une dizaine de microperforations, par exemple disposées sur un cercle d'un diamètre d'environ 2 centimètres. L'ouverture 11 permet au son de sortir proprement du deuxième étui 3 sans résonance. L'appareil électronique est prisonnier dans le deuxième étui 3 qui est fermé sur tous ses côtés de manière suffisante à cet effet.

Le dispositif 1 selon l'invention est au moins partiellement constitué d'une seule pièce de matériau commune aux premier étui 2 et deuxième étui 3. Cette caractéristique a pour avantage une vitesse de production augmentée par rapport à l'utilisation de différents matériaux, ainsi qu'un coût de production diminué par rapport à l'utilisation d'une pluralité de matériaux.

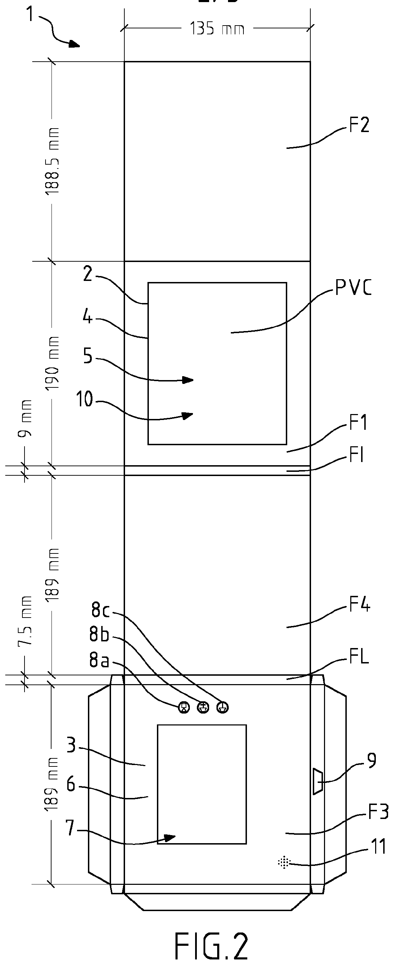

La pièce de matériau commune est une pièce de matériau en feuille, en particulier du papier épais, obtenue par découpe (figure 2). Un matériau en feuille a pour avantage d'être pliable et peu onéreux.

Le premier étui 2 comprend des moyens de protection 10 du support graphique 4. Ces moyens de protection 10 comprennent de préférence une feuille constituée de PVC (polychlorure de vinyle) transparent. Ces moyens de protection sont agencés pour empêcher l'accès au support graphique 4 par la première fenêtre 5. Ainsi, le support graphique 4 est protégé d'agressions externes au dispositif 1 et présente en conséquence une plus grande pérennité.

Le premier étui 2 est en outre agencé pour protéger l'afficheur électronique 6 et les zones délimitées 8a, 8b et 8c lorsque le dispositif 1 est dans la position fermée. L'afficheur électronique 6 et les zones délimitées 8a, 8b, 8c présentent en conséquence une plus grande pérennité.

Dans un deuxième mode de réalisation, uniquement décrit pour ses différences avec le premier mode de réalisation, le dispositif 1 selon l'invention est intégralement constitué d'une seule pièce de matériau commune aux deux étuis. Cette caractéristique a pour avantage une vitesse de production augmentée par rapport à l'utilisation de différents matériaux, ainsi qu'un coût de production diminué par rapport à l'utilisation de différents matériaux. Dans ce mode de réalisation, les fenêtres ne sont pas garnies de matériau transparent.

La figure 2 illustre un flan d'un dispositif 1 selon le premier mode de réalisation de l'invention, c'est-à-dire la découpe de papier épais permettant de réaliser par pliage et collage le dispositif 1.

Sur la figure 2 sont représentés différents éléments déjà décrits et illustrés par les figures 1, 3 et 4.

Le premier étui 2 et le deuxième étui 3 sont reliés par la face latérale Fl rectangulaire de dimension 9 mm par 135 mm.

Le premier étui 2 comprend une première face F1 rectangulaire de dimensions 190 millimètres par 135 millimètres. La première face F1 comprend la première fenêtre 5 agencée pour permettre d'observer une partie du support graphique 4. Les moyens de protection 10 du support graphique 4 comprenant une feuille constituée de PVC sont insérés entre le support graphique 4 et la première face du premier étui 2. Le premier étui 2 comprend en outre une deuxième face F2 rectangulaire de dimensions 188,5 millimètres par 135 millimètres.

Le deuxième étui 3 comprend une première face F3 rectangulaire de dimension 189 millimètres par 135 millimètres. La première face F3 comprend la deuxième fenêtre 7 agencée pour permettre d'observer une partie de l'afficheur électronique 6.

Le deuxième étui 3 comprend en outre l'ouverture 9 permettant une connexion d'un autre dispositif électronique à l'appareil électronique.

Le deuxième étui 3 comprend en outre une deuxième face F4 rectangulaire de dimensions 189 millimètres par 135 millimètres. Les deux faces F3 et F4 sont reliées par une face latérale FL de dimension 7,5 millimètres par 135 millimètres.

Il est également proposé un procédé pour constituer une carte avec écran telle que carte postale, carte souvenir, carte de voeux, faire-part ou album souvenir. Dans le procédé selon l'invention, l'afficheur électronique du système selon l'invention peut être chargé avec un contenu vidéo personnalisé, et le support graphique personnalisé peut être placé dans le premier étui. Il est ensuite possible de modifier le contenu vidéo en utilisant le connecteur relié à l'afficheur électronique et/ou de personnaliser le support graphique en le retirant et en le remplaçant par un autre.

Bien sûr, l'invention n'est pas limitée aux exemples qui viennent d'être décrits et de nombreux aménagements peuvent être apportés à ces exemples sans sortir du cadre de l'invention. L'appareil électronique pourrait être par exemple une clé USB munie d'un écran pour afficher un contenu stocké dans sa mémoire. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Dispositif (1) comprenant :
- un premier étui (2) apte à recevoir un support graphique (4), ledit premier étui (2) comprenant une première fenêtre (5) agencée pour permettre d'observer tout ou partie dudit support graphique, et
- un deuxième étui (3) apte à recevoir un appareil électronique comprenant un afficheur électronique (6), ledit deuxième étui (3) comprenant une deuxième fenêtre (7) agencée pour permettre d'observer tout ou partie dudit afficheur électronique (6),
- lesdits premier et deuxième étuis (2, 3) étant articulés l'un à l'autre de sorte que le premier étui (2) fasse couvercle pour l'afficheur électronique (6) lorsque le dispositif (1) est dans une position dite fermée
**Caractérisé en ce que** dans la position fermée, la première fenêtre (5) est tournée du côté opposé au deuxième étui (3) de façon que le support graphique (4) est visible à travers la première fenêtre (5) lorsque le dispositif est dans la position fermée,
- il est au moins partiellement constitué d'une seule pièce de matériau commune aux deux étuis (2, 3).
- la pièce de matériau commune est une pièce de matériau en feuille, en particulier du papier épais.

2. Dispositif selon la revendication 1, **caractérisé en ce qu'**il comprend des zones délimitées (8a, 8b, 8c) agencées pour transmettre une commande à destination de l'appareil électronique.

3. Dispositif selon la revendication 2, **caractérisé en ce que** les zones délimitées (8a, 8b, 8c) sont disposées sur une face du deuxième étui (3).

4. Dispositif selon l'une quelconque des revendications 1 à 3, **caractérisé en ce que** le deuxième étui (3) est en outre apte à recevoir un connecteur de l'appareil électronique et **en ce que** ledit deuxième étui (3) comprend en outre une ouverture (9) agencée pour permettre une connexion d'un autre dispositif électronique audit connecteur, de préférence dans une position du dispositif (1) dite fermée.

5. Dispositif selon l'une quelconque des revendications 1 à 4, **caractérisé en ce que** le premier étui (2) comprend des moyens de protection (10) du support graphique (4), de préférence une feuille transparente constituée de PVC.

6. Dispositif selon l'une quelconque des revendications 1 à 5, **caractérisé en ce que** le premier étui (2) comprend en outre une ouverture agencée pour permettre la mise en place et le retrait du support graphique (4) dudit premier étui (2), de préférence lorsque ledit dispositif (1) est dans une position dite fermée.

7. Procédé de fabrication d'un dispositif (1) selon l'une des revendications 1 à 6 par pliage d'un matériau en feuille.

8. Système comprenant :
- un appareil électronique incluant un afficheur électronique (6),
- un dispositif (1) selon l'une des revendications 1 à 7.

9. Système selon la revendication 8, caractérisé en ce en ce que l'appareil électronique comprend en outre un connecteur relié audit afficheur électronique (6).

10. Système selon la revendication 8 ou 9, lorsque dépendante de la revendication 2, **caractérisé en ce que** l'appareil électronique comprend des moyens physiques de commande et **en ce que** les zones délimitées (8a, 8b, 8c) sont disposées au regard desdits moyens physiques de commande.

11. Système selon l'une de revendications 8 à 10, **caractérisé en ce que** il est destiné à constituer une carte-souvenir, une carte de voeux, une carte postale, un faire-part ou un album souvenir.

12. Procédé pour un système selon la revendication 11.

## Patentansprüche

1. Vorrichtung (1), welche folgendes umfasst:
- ein erstes Etui (2) zur Aufnahme eines grafisches Supports (4), wobei besagtes Etui (2) ein erstes Fenster (5) umfasst, das so angeordnet ist, dass man besagten grafischen Support ganz oder teilweise beobachten kann, und
- ein zweites Etui (3), das ein elektronisches Gerät mit einer elektronische Anzeige (6) aufnehmen kann, wobei besagtes zweites Etui (3) ein zweites Fenster (7) umfasst, das so angeordnet ist, dass man besagte elektronische Anzeige (6) ganz oder teilweise beobachten kann,
- wobei das erste und das zweite Etui (2, 3) gelenkig miteinander verbunden sind, sodass das erste Etui (2) als Deckel für die elektronische Anzeige (6) dient, wenn sich die Vorrichtung (1) in einer geschlossenen Position befindet, **dadurch gekennzeichnet,**
- **dass** das erste Fenster (5) in der geschlossenen Position zur Seite gegenüber des zweiten Etuis (3) gedreht ist, sodass der grafische Support (4) durch das erste Fenster (5) sichtbar ist, wenn sich die Vorrichtung in geschlossener Position befindet,
- sie zumindest teilweise aus einem einzigen Stück Material besteht, das beiden Etuis (2, 3) gemeinsam ist.
- das beiden Etuis gemeinsame Materialteil ein Materialteil aus Blattmaterial, insbesondere aus dickem Papier, ist.

2. Vorrichtung nach Anspruch 1, **dadurch gekennzeichnet, dass** sie abgegrenzte Bereiche (8a, 8b, 8c) umfasst, die so angeordnet sind, dass ein Befehl an das elektronische Gerät übermittelt werden kann.

3. Vorrichtung nach Anspruch 2, **dadurch gekennzeichnet, dass** die abgegrenzten Bereiche (8a, 8b, 8c) auf einer Seite des zweiten Etuis (3) angeordnet sind.

4. Vorrichtung nach einem der Ansprüche 1 bis 3, **dadurch gekennzeichnet, dass** das zweite Etui (3) des Weiteren in der Lage ist, einen Verbinder des elektronischen Gerätes aufzunehmen, und dadurch, dass besagtes zweites Etui (3) des Weiteren eine Öffnung (9) umfasst, die so angeordnet ist, dass das Anschließen einer anderen elektronischen Vorrichtung an den Verbinder, vorzugsweise in einer sogenannten geschlossenen Position der Vorrichtung (1), möglich ist.

5. Vorrichtung nach einem der Ansprüche 1 bis 4, **dadurch gekennzeichnet, dass** das erste Etui (2) Mittel zum Schutz (10) des grafischen Supports (4) umfasst, vorzugsweise eine transparente Folie, die aus PVC besteht.

6. Vorrichtung nach einem der Ansprüche 1 bis 5, **dadurch gekennzeichnet, dass** besagtes erstes Etui (2) des Weiteren eine Öffnung umfasst, die so angeordnet ist, dass das Einsetzen und Entnehmen des grafischen Supports (4) des besagten ersten Etuis (2) möglich ist, vorzugsweise, wenn sich besagte Vorrichtung (1) in einer sogenannten geschlossenen Position befindet.

7. Verfahren zur Herstellung einer Vorrichtung (1) nach einem der Ansprüche 1 bis 6 durch Falten von Blattmaterial.

8. System welches folgendes umfasst:
- ein elektronisches Gerät mit einer elektronischen Anzeige (6),
- eine Vorrichtung (1) nach einem der Ansprüche 1 bis 7.

9. System nach Anspruch 8, **dadurch gekennzeichnet, dass** das elektronische Gerät des Weiteren einen Verbinder umfasst, der an die elektronische Anzeige (6) angeschlossen ist.

10. System nach Anspruch 8 oder 9, wenn es von Anspruch 2 abhängig ist, **dadurch gekennzeichnet, dass** das elektronische Gerät physikalische Steuermittel umfasst und dadurch, dass die abgegrenzten Bereiche (8a, 8b, 8c) gegenüber von den besagten physikalischen Steuermitteln angeordnet sind.

11. System nach einem der Ansprüche 8 bis 10, **dadurch gekennzeichnet, dass** es dazu bestimmt ist, einer Souvenirkarte, eine Grußkarte, eine Postkarte, einer Karte zur Anzeige eines Ereignisses oder ein Erinnerungsalbum zu bilden.

12. Verfahren für ein System nach Anspruch 11.

## Claims

1. A device (1) comprising:
- a first sleeve (2) adapted to receive a graphic medium (4), with said first sleeve (2) comprising a first window (5) so arranged as to enable all or part of the graphic medium (4) to be viewed, and
- a second sleeve (3) adapted to receive an electronic device comprising an electronic display (6), with said second sleeve (3) comprising a second window (7) so arranged as to enable all or part of said electronic display (6) to be viewed,
with said first and second sleeves (2, 3) being hinged to each other so that the first sleeve (2) is used as a cover for the electronic display (6) when the device (1) is in a so-called closed position,
**characterized in that**, in the closed position, the first window (5) faces the side opposite the second sleeve (3), so that the graphic medium (4) can be viewed through the first window (5) when the device is in the closed position,
it is at least partially made in one piece, of a material common to both sleeves (2, 3),
the piece made of the common material is a piece of a sheet material, more specifically thick paper.

2. A device according to claim 1, **characterized in that** it comprises delimited areas (8a, 8b, 8c) so arranged as to transmit control to the electronic device.

3. A device according to claim 2, **characterized in that** the delimited areas (8a, 8b, 8c) are positioned on one face of the second sleeve (3).

4. A device according to any one of claims 1 to 3, **characterized in that** the second sleeve (3) is further adapted to receive a connector of the electronic device and **in that** said second sleeve (3) further comprises an opening (9) so arranged as to enable a connection of another electronic device to said connector, preferably in a so-called closed position of the device (1).

5. A device according to any one of claims 1 to 4, **characterized in that** the first sleeve (2) comprises means (10) for protecting the graphic medium (4), preferably a transparent sheet made of PVC.

6. A device according to any one of claims 1 to 5, **characterized in that** the first sleeve (2) further comprises one opening so arranged as to enable the positioning and the removal of the graphic medium (4) into/from said first sleeve (2), preferably when said device (1) is in a so-called closed position.

7. A method for manufacturing a device (1) according to one of claims 1 to 6, by folding a sheet material.

8. A system comprising:
- an electronic device including an electronic display (6),
- a device (1) according to one of claims 1 to 7.

9. A system according to claim 8, **characterized in that** the electronic device further comprises a connector connected to said electronic display (6).

10. A system according to claim 8 or 9, when depending on claim 2, **characterized in that** the electronic device comprises physical control means and **in that** the delimited areas (8a, 8b, 8c) are positioned opposite said physical control means.

11. A system according to one of claims 8 to 10, **characterized in that** it is intended to be used as a memory card, a greeting card, a postcard, a personal announcement or a memory book.

12. A method for a system according to claim 11.
